# EUROPEAN PATENT SPECIFICATION

(11) **EP 3 715 943 B1**
(45) Date of publication and mention of the grant of the patent: **20.03.2024**
(21) Application number: 19206411.1
(22) Date of filing: 31.10.2019
(51) Int. Cl.: G02F 1/1345, G02F 1/1333

(54) **DISPLAY MODULE, TERMINAL AND METHOD FOR MANUFACTURING SAME**
ANZEIGEMODUL, ENDGERÄT UND VERFAHREN ZU SEINER HERSTELLUNG
MODULE D'AFFICHAGE, TERMINAL ET PROCÉDÉ DE FABRICATION ASSOCIÉ

(30) Priority: 29.03.2019 CN 201910252262
(43) Date of publication of application: 30.09.2020
(73) Proprietor: Beijing Xiaomi Mobile Software Co., Ltd., Beijing 100085 (CN)
(72) Inventor: GU, Jianglin, Beijing, Beijing 100085 (CN); YEN, Chiafu, Beijing, Beijing 100085 (CN)
(74) Representative: dompatent von Kreisler Selting Werner - Partnerschaft von Patent- und Rechtsanwälten mbB

(56) References cited:
- CN-A- 106 950 763
- US-A1- 2006 152 664
- US-A1- 2012 257 361
- US-A1- 2017 003 540
- US-A1- 2019 011 754
- US-B1- 6 690 032

## Description

### TECHNICAL FIELD

The present disclosure pertains to the technical field of electronic devices, and relates to a display module, a terminal, and manufacturing methods thereof.

### BACKGROUND

An electronic product, such as a mobile phone or a tablet, is provided with a display screen as an external input device.

Current electronic products pursue a high screen-to-body ratio, so as to reduce the distance between the device frame and the display screen. US 6690032 B1 discloses an electro-optical device comprises first and second substrates disposed facing each other, an interconnect formed on the surface of the first substrate opposing the second substrate, and a conductive member passing through the second substrate and reaching both surfaces of the second substrate, and the conductive member and interconnect are electrically connected between the first and second substrates. US 2019011754 A1 describes display panel comprises: a first substrate having an outer surface and an inner surface, wherein a bonding region is formed on a peripheral region of the outer surface, a plurality of through micro-holes are formed on the bonding region, a conductive material is filled in the through micro-holes, and an electrode layer is formed on the inner surface; and a flexible printed circuit (FPC) film is electrically connecting the bonding region and electrode layer on the inner surface of the first substrate by the conductive material.
US 2017/003540 A1 discloses a display which includes a first substrate, a second substrate, a liquid crystal layer, a backlight source, a driving integrated circuit and a conductive portion. The liquid crystal layer is disposed between the first substrate and the second substrate. The backlight source is disposed at a first side of the second substrate. The driving integrated circuit is disposed at a second side, opposite to the first side, of the second substrate. The conductive portion is electrically coupled to the driving integrated circuit and passes through the second substrate to be electrically coupled to the backlight source The following documents also constitute prior art relevant to the claimed invention: CN 106 950 763 A, US 2006/152664 A1, US 2012/257361 A1.

### SUMMARY

The present invention provides a display module, a terminal, and a manufacturing method of a display module.

The invention is defined in the appended claims.

The technical solution according to the embodiment of the present disclosure may have the following beneficial effects.

The conductive via hole is disposed on the substrate layer of the display screen, and the conductive material is provided in the conductive via hole, and the conductive material is used as the signal path, which saves the space occupied by the circuitry to pass through from the side of the display screen, reduces the distance between the display screen and the device frame, and increases the screen-to-body ratio of the electronic device.

It is to be understood that both the foregoing general description and the following detailed description are exemplary and illustrative only and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic cross-sectional view of a screen component of an electronic device in the related art;
FIG. 2 is a side cross-sectional view of the display module according to an exemplary embodiment which is not according to the claimed invention;
FIG. 3 is a side cross-sectional view of the display module according to another exemplary embodiment;
FIG. 4 is a flow chart showing the manufacturing of the display module according to an exemplary embodiment;
FIG. 5 is a schematic view of a manufacturing process of the display module according to an exemplary embodiment; and
FIG. 6 is a schematic structural view of a terminal according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the disclosure as recited in the appended claims.

The present disclosure provides a display module which solves a problem in the related art. Specifically, since a driving integrated circuit (IC) needs to be disposed at an edge of the display screen, such that the driving IC occupies the space between the display screen and the device frame, it is difficult to reduce the edge distance (the border) between the device frame and the display screen.

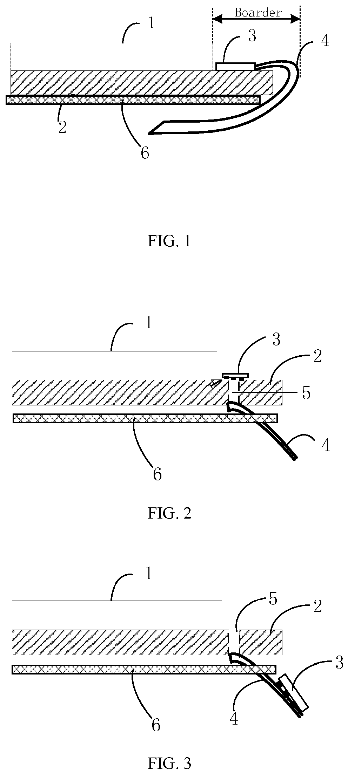

FIG. 1 is a side cross-sectional view of a display module of an electronic device in the related art. The screen component is a liquid crystal display (LCD).

The LCD display screen includes a substrate layer 2 which is made of insulating material. The insulating material may be glass or other transparent insulating material. A pixel circuit is disposed on the substrate layer 2. The pixel circuit includes a gate electrode, a gate insulator and a semiconductor layer. The gate insulator is configured to insulate the semiconductor layer and the gate electrode from each other. A source electrode and a drain electrode are further disposed on the base substrate.

An upper surface of the substrate layer 2 is provided with a liquid crystal display layer 1. A driving chip 3 disposed side by side with the liquid crystal display layer 1. An output pin of the driving chip 3 is connected to an input end of the pixel circuit for controlling the brightness of each of the pixels in the pixel circuit so as to control the display state of the liquid crystal display layer 1.

A backlight module 6 is disposed under the substrate layer 2 for providing a light source for the liquid crystal display layer 1.

An input pin of the driving chip 3 is connected to a flexible circuit board 4. The flexible circuit board 4 is connected to a circuit board at a terminal, and is arranged to go around from the edge of the substrate layer 2 to the lower surface of the substrate layer 2. The flexible circuit board 4 is configured for receiving a control signal from the terminal.

In the related art, since a driving chip needs to be mounted at an edge of the liquid crystal display layer 1, such that the driving chip 3 occupies the space between the liquid crystal display layer 1 and the device frame, and since the flexible circuit board 4 connected to the driving chip 3 needs to be arranged to go around from the edge of the substrate layer 2 to the lower surface of the substrate layer, this causes a problem. Specifically, the edge distance (commonly referred to as the border) between the liquid crystal display layer and the edge of the substrate layer is further increased.

FIG. 2 is a side cross-sectional view of the display module according to an exemplary embodiment which is not according to the claimed invention. The display module includes a backlight module 6, a substrate layer 2, a liquid crystal display layer 1, and a driving chip 3. The substrate layer 2, the liquid crystal display layer 1, and the driving chip 3 are disposed above the backlight module 6.

At least one conductive via hole 5 is disposed in the substrate layer 2. Illustratively, a plurality of conductive via holes having a high density and being disposed on the substrate layer 2. The number of conductive via holes that are provided may be dependent upon the number of connection lines between the liquid crystal display layer 1 and the driving chip 3. By a conductive via, comprising a conductive via hole and a conductive material disposed in the conductive via hole, an electrical connection between the driving component and another component of the display module is provided, wherein the electrical connection goes through the plane of the substrate layer. The conductive via hole 5 is provided with a conductive material, and the conductive material forms a signal path for the driving chip 3.

Alternatively, a set of driving components are respectively disposed on the upper surface and the lower surface of the substrate layer 2, and the signal paths between the driving components are realized by the conductive material in the conductive via hole 5. Or, the driving component is disposed on the lower surface of the substrate layer 2, and a signal path is formed by the conductive material in the conductive via hole 5 and the liquid crystal display layer 1 above the substrate layer 2.

Alternatively, the conductive via hole 5 has a diameter of 5 µm to 30 µm.

In summary, with respect to the display module according to this embodiment, a conductive via hole 5 is disposed on the substrate layer 2 of the display screen, and the conductive via hole 5 is provided with a conductive material. The conductive material is used as a signal path, which saves the space occupied by the circuitry to pass through from the side of the display screen. Moreover, the conductive material reduces the distance between the display screen and the device frame, and increases the screen-to-body ratio of the electronic device.

With continued reference to FIG. 2, the driving component includes at least a driving chip 3 and a flexible circuit board 4. The signal path is a path between the driving chip 3 and the flexible circuit board 4.

Alternatively, the liquid crystal display layer 1 includes a pixel circuit. An input pin of the pixel circuit is connected to an output pin of the driving chip 3, and an input pin of the driving chip 3 is electrically connected to the conductive material in the conductive via hole 5. In an alternative embodiment, the pixel circuit is a Thin Film Transistor (TFT).

The flexible circuit board 4 is disposed on the lower surface of the substrate layer 2. One end of the flexible circuit board 4 is electrically connected to the driving chip 3 disposed on the upper surface of the substrate layer 2 through the conductive material in the conductive via hole 5, and the other end of the flexible circuit board 4 is connected to a control unit in an electronic device. A control unit sends a command signal to the driving chip 3 through the flexible circuit board 4 and the conductive material. The driving chip 3 sends a driving signal to the pixel circuit according to the received command signal for controlling the display state of the liquid crystal display layer 1.

Alternatively, an opening is disposed on the backlight module 6, and the size of the opening is configured to accommodate the flexible circuit board 4. The flexible circuit board 4 passes through the backlight module 6 through the opening. Since the flexible circuit board 4 is thin, the impact thereof on the backlight module 6 is negligible.

In summary, with respect to the display module according to this embodiment, the driving chip 3 and the flexible circuit board 4 in the driving component are disposed on the upper surface and the lower surface of the substrate layer 2, respectively. The electrical connection is achieved by the conductive via hole 5 having a conductive capability, which saves the space occupied by the flexible circuit board 4 in traversing the distance from the edge of the substrate layer 2 to the lower side of the substrate layer 2, and helps to reduce the distance between the liquid crystal display layer 1 and the device frame.

Based on the embodiment of FIG. 2, FIG. 3 shows a side cross-sectional view of the display module according to an embodiment of the claimed invention. The driving component includes at least a driving chip 3 and a flexible circuit board 4. The signal path is a path between the liquid crystal display layer 1 and the flexible circuit board 4.

According to the claimed invention, the liquid crystal display layer 1 includes a pixel circuit. An input pin of the pixel circuit is electrically connected to the conductive material within the conductive via hole 5. In an alternative embodiment, the pixel circuit is a Thin Film Transistor (TFT).

A first end of the flexible circuit board 4 is disposed on a lower surface of the substrate layer 2. An output pin of the flexible circuit board 4 is connected to an input pin of the pixel circuit on the upper surface of the substrate layer 2 through the conductive material in the conductive via hole 5. A second end of the flexible circuit board 4 is connected to an output pin of the driving chip 3, and an input pin of the driving chip 3 is connected to a control unit in the electronic device. The control unit sends a command signal to the driving chip 3. The driving chip 3 sends a driving signal to the pixel circuit in the liquid crystal display layer 1 through the flexible circuit board 4 and the conductive material for controlling the display state of the liquid crystal display layer 1.

According to the claimed invention, an opening is disposed on the backlight module 6, and the size of the opening is configured to accommodate the flexible circuit board 4. The driving chip 3 is disposed on the flexible circuit board 4, and the driving chip 3 is disposed outside the backlight module 6. The flexible circuit board 4 connects the driving chip 3 to the conductive material in the conductive via hole 5 through the opening.

In summary, with respect to this embodiment, the flexible circuit board 4 is disposed under the substrate layer 2, which effectively avoids the problem that the flexible circuit board occupies space in the case of passing through from the side of the substrate layer 2. Moreover, the driving chip 3 is disposed outside the backlight module 6, which avoids the problem that the driving chip 3 interferes with the backlight module 6.

The claimed invention provides a terminal including: a control unit, a middle frame, and a display module disposed at a front side of the middle frame. The display module is configured in accordance with the display module according to claim 1.

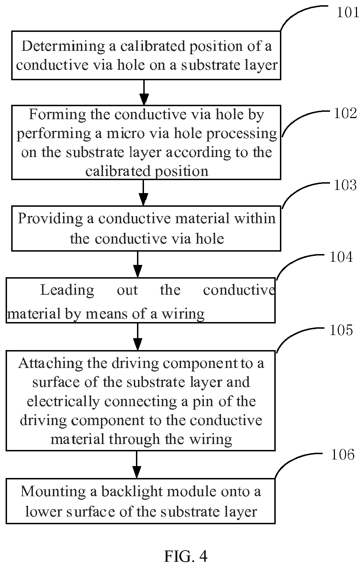

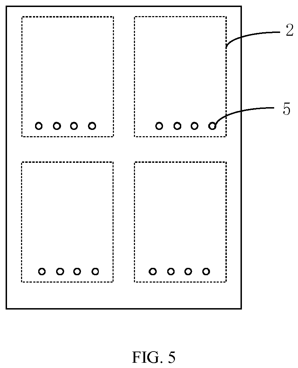

The claimed invention provides a method for manufacturing the display module according to claim 1. Referring to FIGs. 2-5, the substrate layer 2 (FIGs. 2 and 3) is for example a glass substrate, and the manufacturing method includes step 101, step 102, step 103, step 104, step 105, and step 106 (FIG. 4).

In step 101 (FIG. 4), a position of the at least one conductive via hole 5 (FIGs. 2, 3 and 5) is determined on the substrate layer 2.

The position of the at least one conductive via hole 5 is preset on the glass by means of lighting and positioning for the mask, in accordance with the total number of conductive via holes to be provided. The position of each of the conductive via holes to be provided is used to prepare for a subsequent punching operation.

In step 102 (FIG. 4), a micro via hole processing procedure is performed on the substrate layer 2 (FIGs. 2, 3 and 5) according to the preset position determined in step 101 to form the conductive via hole 5.

A high-density punching operation is performed on a designated area of the glass according to the preset position that was determined in step 101.

Alternatively, a high-density micro via hole processing procedure is performed on the glass by means of lasering, and the via hole 5 (FIGs. 2, 3 and 5) has a diameter of 5 µm to 30 µm.

In step 103 (FIG. 4), the conductive via hole 5 (FIGs. 2, 3 and 5) is provided with a conductive material.

Alternatively, the conductive via hole 5 is at least partially filled with a conductive material such as silver paste, copper paste; or a conductive material is deposited within the conductive via hole using the lighting processing, so that electrical conductivity is provided between the upper surface and the lower surface of the via hole.

In step 104 (FIG. 4), the conductive material is leaded out by means of a wiring.

During thinning of the substrate layer 2 (FIGs. 2, 3 and 5), the conductive material in the conductive via hole 5 is leaded out by means of a through glass via (TGV) wiring. The position at which the conductive material is leaded out is dependent upon the position at which the driving chip 3 is to be disposed.

In step 105 (FIG. 4), the driving component is attached to a surface of the substrate layer 2 (FIGs. 2, 3 and 5) so as to electrically connect a pin of the driving component to the conductive material through the wiring.

Not according to the claimed invention, the driving component includes a driving chip 3 (FIGs. 2 and 3) bonded on the upper surface of the substrate layer 2 and a flexible circuit board bonded on the lower surface of the substrate layer 2.

In an alternative embodiment which is not according to the claimed invention, the driving chip 3 is attached to the upper surface of the substrate layer 2, and is connected to the conductive material through the wiring. The flexible circuit board 4 is attached to the lower surface of the substrate layer 2, and is connected to the conductive material through the wiring. The connection relationship is the same as that of the embodiment of FIG. 2, and is not described herein again.

According to the claimed invention, the flexible circuit board 4 is attached to the lower surface of the substrate layer, and is connected to the conductive material through the wiring. The connection relationship is the same as that of the embodiment of FIG. 3, and is not described herein again.

In step 106 (FIG. 4), a backlight module 6 (FIGs. 2 and 3) is mounted onto a lower surface of the substrate layer 2.

An opening is reserved on the backlight module 6 for connecting the flexible circuit board 4 to a component of an external electronic device through the opening.

In summary, with respect to this embodiment, a conductive via hole 5 (FIGs. 2, 3, and 5) is previously disposed on the substrate layer 2, and a conductive material is poured into the via hole 5 to achieve a TGV hole of the substrate layer 2. The via hole 5 is provided with the conductive material to realize the signal path being provided between the upper surface and the lower surface of the substrate layer 2, which reduces the border distance and improves the screen-to-body ratio of the electronic device.

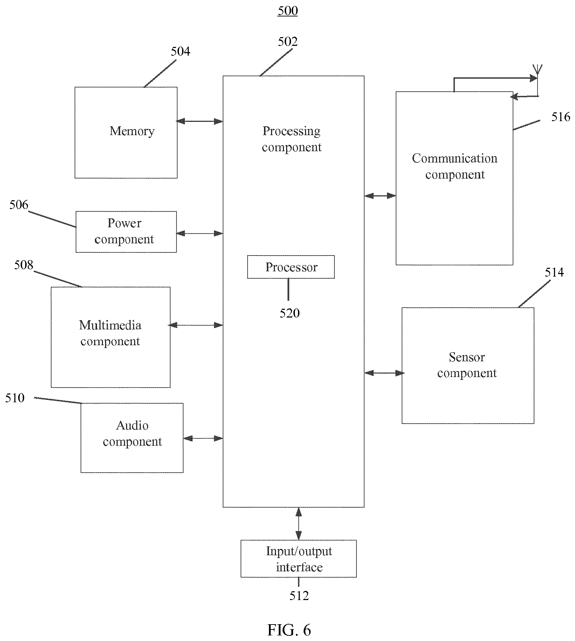

FIG. 6 is a block diagram of a terminal 500 configured in accordance with an exemplary embodiment. For example, the terminal 500 may be a mobile terminal, a tablet computer, a personal computer, a portable electronic device, a display device, or the like.

Referring to FIG. 6, the terminal 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls the overall operations of the terminal 500, such as operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the terminal 500. Examples of such data include instructions for any applications or methods operated on the terminal 500, contact data, phonebook data, messages, pictures, videos, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the terminal 500. The power component 506 may include a power management system, one or more power sources, and any other components associated with the generation, management, and distribution of power in the terminal 500.

The multimedia component 508 includes a screen providing an output interface between the terminal 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense the duration and pressure associated with the touch or swipe action. In some embodiments, the multimedia component 508 includes a front camera and/or a rear camera. The front camera and the rear camera may receive external multimedia data while the terminal 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive external audio signals when the terminal 500 is in an operational mode, such as a call mode, a recording mode, or a voice recognition mode. The received audio signal may be further stored in the memory 504 or transmitted via the communication component 516. In some embodiments, the audio component 510 further includes a speaker for outputting audio signals.

The I/O interface 512 provides an interface between the processing component 502 and peripheral interface modules, such as a keyboard, a click wheel, buttons, or the like. The buttons may include, but are not limited to, a home button, a volume button, a start button, and a lock button.

The sensor component 514 includes one or more sensors to provide status assessments of various aspects of the terminal 500. For instance, the sensor component 514 may detect an on/off status of the terminal 500, relative positioning of components, e.g., the display device and the mini keyboard of the terminal 500. The sensor component 514 may also detect a position change of the terminal 500 or a component of the terminal 500, presence or absence of user contact with the terminal 500, orientation or acceleration/deceleration of the terminal 500, and temperature change of the terminal 500. The sensor component 514 may include a proximity sensor configured to detect the presence of nearby objects without any physical contact. The sensor component 514 may also include a light sensor, such as a CMOS or CCD image sensor, used for imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the terminal 500 and other devices. The terminal 500 can access a wireless network based on a communication standard, such as WiFi, WiMAX, 2G, or 3G, 4G, 5G, Bluetooth, or a combination thereof. In an exemplary embodiment, the communication component 516 receives broadcast signals or broadcast associated information from an external broadcast management system via a broadcast channel.

In exemplary embodiments, the terminal 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any of the previously-described methods.

In an exemplary embodiment, there is also provided a non-transitory computer readable storage medium including instructions, such as the memory 504 including instructions executable by the processor 520 of the terminal 500 to perform any of the previously-described methods. For example, the non-transitory computer readable storage medium may be a ROM, a random access memory (RAM), a CD-ROM, a magnetic tape, a floppy disk, and an optical data storage device, and the like.

Understandably, the term "plurality" herein refers to two or more. "And/or" herein describes the correspondence of the corresponding objects, indicating that any of three kinds of relationships may exist. For example, A and/or B, can be expressed as: A exists alone, A and B exist concurrently, B exists alone. The character "/" generally indicates that the context object is an "OR" relationship.

The reference numerals in the present disclosure are merely intended for description and do not represent any merits.

The foregoing descriptions are merely preferred embodiments of the present disclosure, and are not intended to limit the present disclosure. The scope of protection is defined by the appended claims.

## Claims

1. A display module comprising:
a backlight module (6),
a substrate layer (2),
a liquid crystal display layer (1), and
a driving component;
wherein the substrate layer (2), the liquid crystal display layer (1), and the driving component are disposed above the backlight module (6), and the liquid crystal display layer (1) is disposed on an upper surface of the substrate layer (2);
wherein the driving component comprises a flexible circuit board (4) and a driving chip (3),
wherein
a first end of the flexible circuit board (4) is disposed on a lower surface of the substrate layer (2), the driving chip (3) is disposed on the flexible circuit board (4), and the driving chip (3) is disposed outside the backlight module (6);
at least one conductive via hole (5) is disposed in the substrate layer (2), the conductive via hole (5) being provided with a conductive material and having a diameter of 5 µm to 30 µm, and the conductive material providing a signal path for the driving component, wherein the signal path is a path between the liquid crystal display layer (1) and the flexible circuit board (4);
an output pin of the flexible circuit board (4) is connected to an input pin of a pixel circuit on an upper surface of the substrate layer (2) through the conductive material, a second end of the flexible circuit board (4) is connected to an output pin of the driving chip (3), and an input pin of the driving chip (3) is adapted to be
connected to a control unit in an electronic device, the control unit being configured to send a command signal to the driving chip (3), the driving chip (3) being configured to send a driving signal to a pixel circuit in the liquid crystal display layer (1) through the flexible circuit board (4) and the conductive material;
an opening is disposed in the backlight module (6), and the size of the opening is configured to accommodate the flexible circuit board (4) and the flexible circuit board (4) passes through the backlight module (6) through the opening .

2. A terminal comprising: a control unit, a middle frame, and a display module according to claim 1 disposed at a front side of the middle frame.

3. A method for manufacturing a display module, the method comprising:
determining a position of a conductive via hole (5) on a substrate layer (2);
forming the conductive via hole (5) by performing a micrometer-sized via hole processing procedure on the substrate layer (2) using the position, wherein the conductive via hole (5) has a diameter of 5 µm to 30 µm;
providing a conductive material within the conductive via hole (5);
leading out the conductive material by means of a wiring;
attaching the driving component to a surface of the substrate layer (2) and electrically connecting a pin of the driving component to the conductive material through the wiring; and
mounting a backlight module (6) onto a lower surface of the substrate layer (2), wherein the driving component comprises a driving chip (3) and a flexible circuit board (4);
the attaching of the driving component to the surface of the substrate layer (2) and electrically connecting the pin of the driving component to the conductive material through the wiring comprises:
attaching a first end of the flexible circuit board (4) to a lower surface of the substrate layer (2), disposing the driving chip (3) on the flexible circuit board (4), disposing the driving chip (3) outside the backlight module (6), and electrically connecting the flexible circuit board (4) to the conductive material through the wiring,
wherein an output pin of the flexible circuit board (4) is connected to an input pin of a pixel circuit on an upper surface of the substrate layer (2) through the conductive material, a second end of the flexible circuit board (4) is connected to an output pin of the driving chip (3), and an input pin of the driving chip (3) is adapted to be
connected to a control unit in an electronic device, the control unit being configured to send a command signal to the driving chip (3), the driving chip (3) being configured to send a driving signal to a pixel circuit in the liquid crystal display layer (1) through the flexible circuit board (4) and the conductive material; and
forming an opening on the backlight module (6), wherein the size of the opening is configured to accommodate the flexible circuit board (4) and the flexible circuit board (4) passes through the backlight module (6) through the opening .

4. The method according to claim 3, wherein the performing the via hole (5) processing procedure on the substrate layer (2) comprises:
performing the via hole (5) processing procedure on the substrate layer (2) by any of: lasering, ultrasonic drilling, dry etching, or wet etching; to form the conductive via hole (5).

5. The method according to claim 3 or 4, wherein the providing of the conductive material within the conductive via hole (5) comprises:
filling the conductive via hole (5) with silver paste;
or,
depositing a conductive material within the conductive via hole (5).

## Patentansprüche

1. Anzeigemodul mit:
einem Backlight-Modul (6),
einer Substratschicht (2),
einer Flüssigkristallanzeigeschicht ((1), und
einer Ansteuerkomponente;
wobei die Substratschicht (2), die Flüssigkristallanzeigeschicht (1) und die Ansteuerkomponente (1) über dem Backlight-Modul (6) angeordnet sind, und die Flüssigkristallanzeigeschicht (1) auf einer Oberseite der Substratschicht (2) angeordnet ist;
wobei die Ansteuerkomponente eine flexible Platine (4) und einen Ansteuerchip (3) aufweist,
wobei
ein erstes Ende der flexiblen Platine (4) auf einer Unterseite der Substratschicht (2) angeordnet ist, der Ansteuerchip (3) auf der flexiblen Platine (4) angeordnet ist, und der Ansteuerchip (3) außerhalb des Backlight-Moduls (6) angeordnet ist;
mindestens ein leitfähiges Kontaktloch (5) in der Substratschicht (2) angeordnet ist, wobei das leitfähige Kontaktloch (5) mit einem leitfähigen Material versehen ist und einen Durchmesser von 5 µm bis 30 µm aufweist, und wobei das leitfähige Material einen Signalpfad für die Ansteuerkomponente bildet, wobei der Signalpfad ein Pfad zwischen der Flüssigkristallanzeigeschicht (1) und der flexiblen Platine (4) ist;
ein Ausgangspin der flexiblen Platine (4) durch das leitfähige Material mit einem Eingangspin einer Pixelschaltung auf einer Oberseite der Substratschicht (2) verbunden ist, ein zweites Ende der flexiblen Platine (4) mit einem Ausgangspin des Ansteuerchips (3) verbunden ist, und ein Eingangspin des Ansteuerchips (3) mit einer Steuereinheit in einer elektronischen Vorrichtung verbindbar ist, wobei der Ansteuerchip (3) dazu ausgebildet ist, durch die flexible Platine (4) und das leitfähige Material ein Ansteuersignal an eine Pixelschaltung in der Flüssigkristallanzeigeschicht (1) zu senden;
eine Öffnung in dem Backlight-Modul (6) angeordnet ist, und die Größe der Öffnung dazu ausgebildet ist, die flexible Platine (4) aufzunehmen, und die flexible Platine (4) durch die Öffnung durch das Backlight-Modul (6) hindurch geht.

2. Terminal mit: einer Steuereinheit, einem Mittelrahmen, und einem Anzeigemodul nach Anspruch 1, das auf einer Vorderseite des Mittelrahmens angeordnet ist.

3. Verfahren zur Herstellung eines Anzeigemoduls, wobei das Verfahren folgenden Schritte aufweist:
Bestimmen einer Position eines leitfähigen Kontaktlochs (5) auf einer Substratschicht (2);
Bilden des leitfähigen Kontaktlochs (5) durch Ausführen eines Vorgangs zur Bildung eines mikrometergroßen Kontaktlochs in der Substratschicht (2) unter Verwendung der Position, wobei das leitfähige Kontaktloch (5) einen Durchmesser von 5 µm bis 30 µm aufweist;
Vorsehen eines leitfähigen Materials in dem leitfähigen Kontaktloch (5);
Herausführen des leitfähigen Materials mittels einer Verdrahtung;
Befestigen der Ansteuerkomponente an einer Fläche der Substratschicht (2) und elektrisches Verbinden eines Pins der Ansteuerkomponente mit dem leitfähigen Material durch die Verdrahtung; und
Anbringen eines Backlight-Moduls (6) an einer Unterseite der Substratschicht (2), wobei die Ansteuerkomponente einen Ansteuerchip (3) und eine flexible Platine (4) aufweist;
wobei das Befestigen der Ansteuerkomponente an der Oberfläche der Substratschicht (2) und elektrisches Verbinden des Pins der Ansteuerkomponente mit dem leitfähigen Material durch die Verdrahtung die folgenden Schritte aufweist:
Befestigen eines ersten Endes der flexiblen Platine (4) an einer Unterseite der Substratschicht (2), Anordnen des Ansteuerchips (3) auf der flexiblen Platine (4), Anordnen des Ansteuerchips (3) außerhalb des Backlight-Moduls (6), und elektrisches Verbinden der flexiblen Platine (4) mit dem leitfähigen Material durch die Verdrahtung,
wobei ein Ausgangspin der flexiblen Platine (4) mit einem Eingangspin einer Pixelschaltung auf einer Oberseite der Substratschicht (2) durch das leitfähige Substrat verbunden ist, ein zweites Ende der flexiblen Platine (4) mit einem Ausgangspin des Ansteuerchips (3) verbunden ist, und ein Ausgangspin des Ansteuerchips (3) mit einer Steuereinheit in einer elektronischen Vorrichtung verbindbar ist, wobei der Ansteuerchip (3) dazu ausgebildet ist, durch die flexible Platine (4) und das leitfähige Material ein Ansteuersignal an eine Pixelschaltung in der Flüssigkristallanzeigeschicht (1) zu senden; und
Bilden einer Öffnung in dem Backlight-Modul (6), wobei die Größe der Öffnung dazu ausgebildet ist, die flexible Platine (4) aufzunehmen, und die flexible Platine (4) durch die Öffnung durch das Backlight-Modul (6) hindurch geht.

4. Verfahren nach Anspruch 3, bei welchem das Ausführen des Vorgangs zur Bildung des Kontaktlochs (5) in der Substratschicht (2) den folgenden Schritt aufweist:
Ausführen des Vorgangs zur Bildung des Kontaktlochs (5) in der Substratschicht (2) durch Lasern, Ultraschallbohren, Trockenätzen, oder Nassätzen, zur Bildung des leitfähigen Kontaktlochs (5).

5. Verfahren nach Anspruch 3 oder 4, bei welchem das Vorsehen von leitfähigem Material in dem leitfähigen Kontaktloch (5) den folgenden Schritt aufweist:
Füllen des leitfähigen Kontaktlochs (5) mit Silberpaste;
oder
Ablagern eines leitfähigen Materials in dem leitfähigen Kontaktloch (5).

## Revendications

1. Ensemble affichage, comprenant :
un module de rétroéclairage (6),
une couche de substrat (2),
une couche d'affichage à cristaux liquides (1), et
un composant d'attaque ;
dans lequel la couche de substrat (2), la couche d'affichage à cristaux liquides (1) et le composant d'attaque sont disposés au-dessus du module de rétroéclairage (6), et la couche d'affichage à cristaux liquides (1) est disposée sur une surface supérieure de la couche de substrat (2) ;
dans lequel le composant d'attaque comprend une carte de circuit imprimé souple (4) et une puce d'attaque (3),
dans lequel
une première extrémité de la carte de circuit imprimé souple (4) est disposée sur une surface inférieure de la couche de substrat (2), la puce d'attaque (3) est disposée sur la carte de circuit imprimé souple (4), et la puce d'attaque (3) est disposée à l'extérieur du module de rétroéclairage (6) ;
au moins un trou d'interconnexion conducteur (5) est disposé dans la couche de substrat (2), le trou d'interconnexion conducteur (5) étant pourvu d'un matériau conducteur et ayant un diamètre de 5 µm à 30 µm, et le matériau conducteur fournissant un trajet de signal pour le composant d'attaque, dans lequel le trajet de signal est un trajet entre la couche d'affichage à cristaux liquides (1) et la carte de circuit imprimé souple (4) ;
une broche de sortie de la carte de circuit imprimé souple (4) est connectée à une broche d'entrée d'un circuit de pixels sur une surface supérieure de la couche de substrat (2) à travers le matériau conducteur, une seconde extrémité de la carte de circuit souple (4) est connectée à une broche de sortie de la puce de commande (3), et une broche d'entrée de la puce d'attaque (3) est adaptée pour être connectée à une unité de commande dans un dispositif électronique, l'unité de commande étant configurée pour envoyer un signal d'attaque à la puce d'attaque (3), la puce d'attaque (3) étant configurée pour envoyer un signal d'attaque à un circuit de pixels dans la couche d'affichage à cristaux liquides (1) à travers la carte de circuit imprimé souple (4) et le matériau conducteur ;
une ouverture est disposée dans le module de rétroéclairage (6), et la taille de l'ouverture est conçue pour loger la carte de circuit imprimé souple (4) et la carte de circuit souple (4) passe à travers le module de rétroéclairage (6) à travers l'ouverture.

2. Terminal comprenant : une unité de commande, un cadre central et un module d'affichage selon la revendication 1 disposé sur un côté avant du cadre central.

3. Procédé de fabrication d'un module d'affichage, le procédé comprenant :
la détermination d'une position d'un trou d'interconnexion conducteur (5) sur une couche de substrat (2) ;
la formation du trou d'interconnexion conducteur (5) en effectuant une procédure de traitement de trous de trou d'interconnexion de taille micrométrique sur la couche de substrat (2) à l'aide de la position, dans lequel le trou d'interconnexion conducteur (5) a un diamètre de 5 µm à 30 µm ;
la fourniture d'un matériau conducteur à l'intérieur du trou d'interconnexion conducteur (5) ;
la conduite du matériau conducteur au moyen d'un câblage ;
la fixation du composant d'attaque à une surface de la couche de substrat (2) et la connexion électrique d'une broche du composant d'attaque au matériau conducteur à travers le câblage ; et
le montage d'un module de rétroéclairage (6) sur une surface inférieure de la couche de substrat (2), dans lequel le composant d'attaque comprend une puce d'attaque (3) et une carte de circuit imprimé souple (4) ;
la fixation du composant d'attaque à la surface de la couche de substrat (2) et la connexion électrique de la broche du composant d'attaque au matériau conducteur à travers le câblage comprend :
la fixation d'une première extrémité de la carte de circuit imprimé souple (4) à une surface inférieure de la couche de substrat (2), la disposition de la puce d'attaque (3) sur la carte de circuit imprimé souple (4), la disposition de la puce d'attaque (3) à l'extérieur du module de rétroéclairage (6), et la connexion électrique de la carte de circuit imprimé souple (4) au matériau conducteur à travers le câblage,
une broche de sortie de la carte de circuit imprimé souple (4) étant connectée à une broche d'entrée d'un circuit de pixels sur une surface supérieure de la couche de substrat (2) à travers le matériau conducteur, une seconde extrémité de la carte de circuit souple (4) étant connectée à une broche de sortie de la puce d'attaque (3), et une broche d'entrée de la puce d'attaque (3) étant adaptée pour être connectée à une unité de commande dans un dispositif électronique, l'unité de commande étant configurée pour envoyer un signal de commande à la puce d'attaque (3), la puce d'attaque (3) étant configurée pour envoyer un signal d'attaque à un circuit de pixels dans la couche d'affichage à cristaux liquides (1) à travers la carte de circuit imprimé souple (4) et le matériau conducteur ; et
la formation d'une ouverture sur le module de rétroéclairage (6), dans lequel la taille de l'ouverture est conçue pour loger la carte de circuit imprimé souple (4) et la carte de circuit souple (4) passe à travers le module de rétroéclairage (6) à travers l'ouverture.

4. Procédé selon la revendication 3, dans lequel le fait d'effectuer la procédure de traitement de trou d'interconnexion (5) sur la couche de substrat (2) comprend :
le fait d'effectuer la procédure de traitement de trou d'interconnexion (5) sur la couche de substrat (2) par l'un quelconque parmi : une opération de laser, un forage par ultrasons, une gravure à sec ou une gravure humide ; pour former le trou d'interconnexion conducteur (5).

5. Procédé selon la revendication 3 ou 4, dans lequel la fourniture du matériau conducteur à l'intérieur du trou d'interconnexion conducteur (5) comprend :
le remplissage du trou d'interconnexion conducteur (5) avec une pâte d'argent ;
ou,
le dépôt d'un matériau conducteur à l'intérieur du trou d'interconnexion conducteur (5).
